# DEMANDE DE BREVET EUROPEEN

(11) **EP 1 146 632 A1**
(43) Date de publication de la demande: **17.10.2001**
(21) Numéro de dépôt: 01400900.5
(22) Date de dépôt: 06.04.2001
(51) Int. Cl.: H02P 1/44

(54) **Dispositif de commande électromécanique à moteur sychrone**

(30) Priorité: 14.04.2000 FR 0004859
(71) Demandeur: Crouzet Automatismes, 26000 Valence (FR)
(72) Inventeur: Flandin, Denis, 94117 Arcueil Cedex (FR); Hilaire, Jean-Francois, 94117 Arcueil Cedex (FR)
(74) Mandataire: Guérin, Michel

(57) **Abrégé**

Pour rendre plus sûr le fonctionnement de ces actionneurs, on prévoit selon l'invention des moyens électroniques pour donner au moteur un couple supérieur au couple nominal du moteur, pendant une durée initiale td (par exemple une seconde) suivant l'ordre de démarrage, puis un couple plus réduit pendant le reste de la durée de fonctionnement du moteur. Pour cela, la tension d'alimentation au départ peut être largement supérieure à la tension nominale sous laquelle le moteur pourrait normalement fonctionner en permanence sans risque d'échauffement anormal. Dans un exemple, la tension d'alimentation (AC) est appliquée au moteur à travers des résistances (R1, R2) qui la font chuter de manière importante; et ces résistances peuvent être court-circuitées par des triacs (TR'1, TR'2 respectivement pour chacun des sens de rotation du moteur) pendant la durée de démarrage td.

Application : actionneur linéaire de clapet de vanne hydraulique, pour vaincre plus facilement les forces de frottement sec, ou les forces de collage du clapet après un long temps passé dans une position donnée.

## Description

L'invention concerne les actionneurs électromécaniques, tels que ceux qu'on peut trouver par exemple pour la commande de vannes, de clapets, de volets, ou pour la mise en pression d'un objet contre un autre.

Elle concerne plus précisément les actionneurs qui peuvent basculer alternativement entre deux positions stables (fonctionnement en tout ou rien) et qui sont maintenus dans cette position stable lorsqu'on coupe l'alimentation électrique. Le maintien en position se fait soit par un réducteur irréversible (notamment dans le cas où le mouvement de rotation du moteur est transformé en mouvement de translation d'un organe d'actionnement mécanique) soit par un frein mécanique ou électromécanique.

Un exemple d'application de tels actionneurs est la commande de vannes pour les installations de chauffage ou de distribution d'eau chaude sanitaire. Dans cette application, on cherche à faire passer le clapet d'une vanne d'une position stable complètement fermée à une position stable complètement ouverte et inversement.

On décrira les buts de la présente invention à propos d'un cas particulièrement intéressant qui est le cas d'un actionneur linéaire constitué par un moteur rotatif suivi d'un organe de conversion du mouvement de rotation en mouvement de translation.

Dans la technique actuelle, on utilise fréquemment des moteurs synchrones pour réaliser de tels actionneurs. La raison en est leur faible coût, leur fonctionnement assez silencieux, leur durée de vie importante, et leur vitesse de rotation bien constante. De plus, ils fonctionnent directement avec une alimentation alternative en 24 Volts, 110 volts, 230 volts, etc. Le mouvement de rotation est converti en translation par une came fixée en bout d'arbre et entraînée en rotation par le moteur. Le relief disymétrique de la came par rapport à l'axe de rotation entraîne un organe d'actionnement (par exemple un poussoir de commande d'un clapet de vanne) depuis une position initiale jusqu'à une position finale.

Dans ce cas, il est facile de placer autour de la came des interrupteurs de fin de course, actionnés par la came, pour détecter la position finale où doit s'arrêter le mouvement et pour couper l'alimentation du moteur lorsque cette position est atteinte. Le moteur reste alors en position finale jusqu'à réception d'un ordre de commande de retour à la position initiale. Lorsque le moteur repart vers la position initiale, la came ne pousse plus sur le poussoir de commande de la vanne, et il faut en général prévoir un ressort de rappel du poussoir (et des éléments mécaniques commandés par ce poussoir, par exemple le clapet de la vanne) vers la position initiale. Le retour à la position initiale est encore détecté par un interrupteur de fin de course actionné par la came, et l'alimentation du moteur est coupée quand cette position est atteinte.

Un inconvénient de ces systèmes est que le moteur doit vaincre, pour partir de la position initiale, non seulement les forces de frottement de toutes les pièces mécaniques mises en jeu dans ce mouvement, mais aussi la force de rappel du ressort. Mais le ressort doit être lui-même assez fort pour vaincre les frottements et autres forces existant à l'arrêt dans la position finale. Ces frottements et forces peuvent être très importants si le système est resté en position finale pendant une longue durée (par exemple toute une saison d'été pour une vanne de chauffage). La vanne tend en effet à rester collée dans la position où elle est restée trop longtemps. Un ressort de force suffisante permet de vaincre cette résistance de collage. Mais plus le ressort est fort, plus le moteur doit être puissant pour le comprimer au départ de la position initiale.

On peut donc préférer un système sans ressort de rappel, et notamment un système dans lequel la conversion du mouvement de rotation en mouvement de translation est faite par un élément qui est activement entraîné par le moteur dans les deux sens. Typiquement, le moyen de conversion de rotation en translation actif dans les deux sens est une vis coopérant avec un écrou. Ces systèmes ont notamment l'avantage de pouvoir être déplacés avec un effort constant du début à la fin de leur mouvement.

Ces systèmes d'entraînement actifs dans les deux sens, et notamment les systèmes vis/écrou, ne sont cependant pas exempts de défauts. Ils présentent des risques de frottement ou même de coincement parfois plus élevé que les autres, en particulier lorsque le pas de vis est trop faible, ou lorsque le moteur est resté dans une position stable pendant une trop longue durée. C'est une des raisons pour lesquelles on considère parfois qu'un système à came et à ressort de rappel est plus approprié dans les cas où on veut une certitude de passage d'une position stable à l'autre lors de la commande de la vanne.

La présente invention vise à obtenir une telle certitude dans le cas de l'utilisation de systèmes de conversion de la rotation en translation avec entraînement actif dans les deux sens, afin de bénéficier à la fois des avantages de ces systèmes et d'une certitude suffisante de fonctionnement correct.

Mais plus généralement, l'invention vise à faire en sorte qu'un actionneur à moteur synchrone, quelle que soit sa constitution, et même s'il utilise un ressort de rappel, risque le moins possible de rester bloquer dans une de ses position stables en présence de frottements ou autres forces de collage trop élevés qu'on rencontre à l'arrêt et qui s'opposent au mouvement de l'actionneur lorsque le moteur reçoit un ordre de commande de passage dans l'autre position stable.

Enfin, un but de l'invention est de réaliser un tel actionneur de manière très simple, peu coûteuse et peu encombrante.

Pour cela, on propose un dispositif de commande électromécanique comprenant un moteur synchrone, caractérisé en ce qu'il comporte des moyens pour donner au couple moteur une première valeur pendant une durée déterminée td suivant un ordre de démarrage du moteur, et une deuxième valeur, largement inférieure à la première valeur, au-delà de cette durée.

On se repose ici sur la probabilité très forte pour que la difficulté de passage d'une position stable à l'autre résulte uniquement des obstacles au démarrage, de sorte que si on a réussi à démarrer, le moteur pourra continuer même si son couple devient plus faible.

Dans ces conditions, le couple demandé au moteur au démarrage pourra même être largement supérieur au couple nominal du moteur en régime permanent, mais pendant une durée suffisamment courte pour que l'échauffement du moteur n'atteigne pas une valeur inadmissible.

Pour donner un couple plus fort au démarrage, on appliquera aux enroulements du moteur synchrone une tension d'alimentation plus forte au démarrage (de préférence plus forte que la tension nominale que peut supporter le moteur en régime permanent) et plus réduite ensuite. Ou bien, on alimentera en permanence le moteur avec une tension supérieure à la tension d'alimentation mais en hachant cette tension à haute fréquence, avec un rapport cyclique plus élevé (ou même égal à 1) pendant la durée de démarrage td, et plus réduit après cette durée, de sorte que le couple moyen sera réduit après la phase de démarrage.

Il est avantageux dès lors de contrôler l'application de la tension d'alimentation aux enroulements du moteur par l'intermédiaire d'un microcontrôleur capable de prendre en compte différentes phases de fonctionnement du moteur lors de son passage d'une position stable à une autre, et capable en particulier de gérer le hachage de la tension d'alimentation.

Le système proposé est particulièrement simple, peu coûteux, et peu encombrant, l'électronique de commande pouvant être facilement intégrée dans le corps de l'actionneur.

D'autres caractéristiques et avantages de l'invention apparaîtront à la lecture de la description détaillée qui suit et qui est faite en référence aux dessins annexés dans lesquels :
- la figure 1 représente un schéma d'une réalisation de l'actionneur selon l'invention ;
- la figure 2 représente un diagramme temporel de signaux électriques décrivant le fonctionnement de la figure 1 ;
- la figure 3 représente une autre réalisation de l'invention ;
- la figure 4 représente un diagramme temporel correspondant à la figure 3 ;
- la figure 5 représente un diagramme temporel correspondant à une variante de fonctionnement du mode de réalisation de la figure 3.

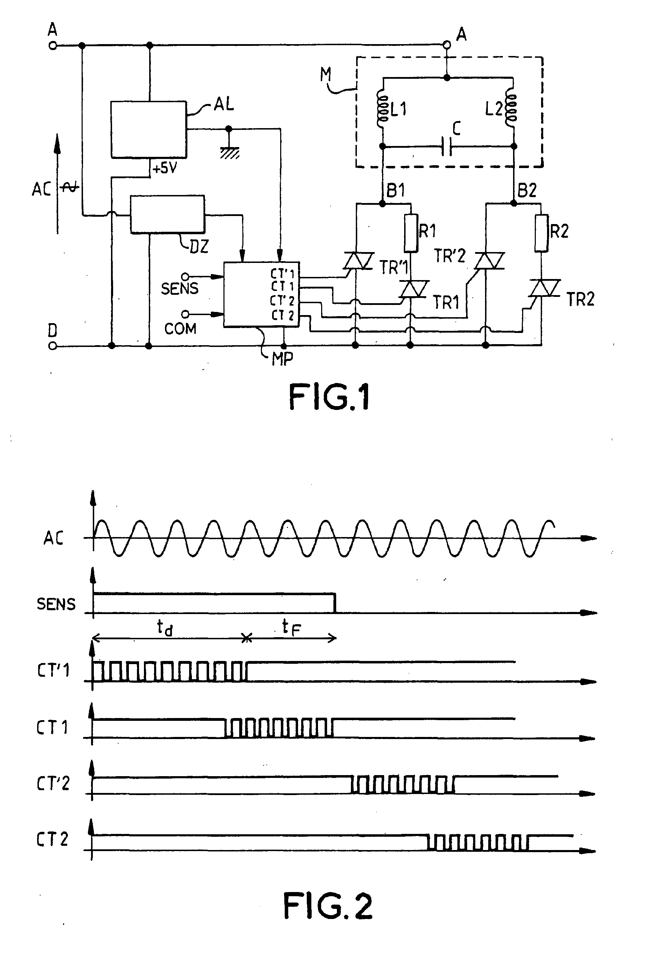

Sur la figure 1, on a représenté le moteur synchrone M de l'actionneur sous forme schématique par deux enroulements statoriques L1 et L2 ayant d'un côté une borne commune destinée à être reliée à une des bornes A de la source de tension d'alimentation alternative AC qui alimente l'actionneur (alimentation en 220 volts ou 110 volts par exemple). Les enroulements ont par ailleurs classiquement chacun une autre borne d'extrémité, B1 pour l'enroulement L1, et B2 pour l'enroulement L2, ces deux bornes étant reliées l'une à l'autre par l'intermédiaire d'un condensateur de démarrage C. La commande de sens de rotation du moteur s'effectue en sélectionnant l'une des bornes B1 et B2 pour relier directement l'un des enroulements, L1 ou L2, à la deuxième borne D de la source de tension alternative.

Le fonctionnement de l'actionneur est de préférence commandé par l'intermédiaire d'un circuit de commande MP dont le coeur est un microcontrôleur programmé (ou un circuit électronique spécifique accomplissant les fonctions du microcontrôleur programmé). Le circuit MP peut comprendre non seulement le microcontrôleur mais aussi éventuellement des circuits d'interface de sortie (petit transformateur d'isolation par exemple) conçus en fonction de la nature des éléments commandés par le circuit MP. Dans la suite, on parlera pour simplifier de microcontrôleur pour désigner le circuit MP. Ce microcontrôleur est alimenté sous faible tension continue (par exemple 5 volts) par un circuit d'alimentation AL. Il reçoit de l'extérieur une commande COM de mise en marche, un signal logique SENS de commande de sens de rotation du moteur, et il reçoit de préférence aussi la sortie d'un circuit DZ de détection de passage par zéro de la tension alternative d'alimentation. La raison de ce circuit DZ est notamment le fait que le microcontrôleur peut commander la mise en conduction de triacs et qu'on préfère, pour des raisons liées aux perturbations dues aux commutations, commander cette mise en conduction au passage par zéro de la tension aux bornes des triacs.

Dans la première réalisation de l'invention, on prévoit que
- d'une part la tension d'alimentation alternative AC est largement supérieure à la tension nominale de fonctionnement du moteur en régime permanent (ce qui veut dire que le moteur ne pourrait pas tourner sans risque d'échauffement anormal, voire de destruction, s'il était alimenté en permanence à cette tension) ; par exemple la tension est de 50% ou même 100% supérieure à la tension nominale; on reviendra plus loin sur cette notion de tension nominale dans le cas où on souhaite un fonctionnement avec une marge de sécurité supérieure par rapport aux risques d'échauffement ;
- et d'autre part des résistances faisant chuter la tension d'alimentation du moteur sont intercalées en série entre les enroulements L1 et L2 et la tension d'alimentation alternative. Ces résistances peuvent être mises en service ou court-circuitées par des triacs commandés par le microcontrôleur MP.

Une première résistance R1 est donc placée en série avec un premier triac TR1 entre la borne B1 et la borne D. Un deuxième triac TR'1 est placé en parallèle sur cet ensemble, entre les bornes B1 et D. De même, une deuxième résistance R2 est placée en série avec un troisième triac TR2 entre les bornes B2 et D, et un quatrième triac TR'2 est en parallèle sur cet ensemble entre les bornes B2 et D.

Les triacs reçoivent des impulsions de mise en conduction du microcontrôleur, à des instants déterminés en fonction de la programmation du microcontrôleur, et en tenant compte d'une synchronisation désirée par rapport aux alternances de la tension alternative. Les sorties CT1, CT'1, CT2, CT'2 du microcontrôleur fournissent des impulsions de mise en conduction respectivement aux triacs TR1, TR'1, TR2, TR'2.

Le fonctionnement est le suivant :

Dans les phases d'arrêt du moteur, tous les triacs restent bloqués.

Pour un premier sens de rotation du moteur synchrone, lors de la réception d'un ordre de mise en route COM, avec un signal SENS par exemple à l'état haut, les triacs TR2 et TR'2 restent bloqués. Le microcontrôleur établit d'abord sur une sortie CT1 une série d'impulsions de mise en conduction du triac TR'1, appliquant donc directement la tension d'alimentation AC à l'enroulement L1, et ceci pendant une durée déterminée td. Après cette durée, le microcontrôleur établit sur sa sortie CT1 une série d'impulsions de mise en conduction du triac TR1 ; puis, le triac TR'1 est bloqué (interruption des impulsions sur la sortie CT'1), de sorte que la tension d'alimentation AC est appliquée à l'enroulement L1 à travers la résistance R1 qui fait chuter de manière significative cette tension. Le changement de niveau de tension est brusque puisqu'il résulte de l'introduction instantanée d'une chute de tension par la résistance R1. La tension réduite est maintenue en principe pendant tout le reste de la durée de fonctionnement du moteur dans le premier sens.

Dans un exemple pratique, si le moteur met quelques secondes à passer de sa première position stable à sa deuxième position stable, on peut prévoir que la durée td d'application de la tension d'alimentation plus élevée est de moins d'une seconde, par exemple de l'ordre d'un dixième de seconde. C'est le microcontrôleur qui mesure le temps td pour commander les triacs en conséquence.

Le moteur doit s'arrêter lorsqu'il a atteint sa deuxième position stable. Cet arrêt peut être commandé par le microcontrôleur, soit au bout d'une deuxième durée déterminée tf (choisie suffisante pour être sûr, compte tenu de la vitesse du moteur, que la deuxième position stable de l'actionneur est atteinte), soit par des détecteurs de fin de course, soit encore par un capteur à effet hall interne au moteur, un tel capteur permettant de déterminer si le moteur est en mouvement ou arrêté. Un tel capteur a d'ailleurs l'avantage de permettre d'autres contrôles par le microcontrôleur, notamment le contrôle de situations anormales telles que l'absence de rotation du moteur après un ordre de mise en rotation.

La figure 2 montre le diagramme temporel correspondant à ce qui a été ainsi décrit. Pour l'un des sens de rotation, le triac TR'1 reçoit initialement et pendant une durée td des impulsions périodiques de mise en conduction (déclenchées de préférence au passage par zéro de la tension alternative à ses bornes). Puis le triac TR'1 cesse d'être périodiquement en conduction et c'est le triac TR1 qui reçoit des impulsions de mise en conduction, pendant une durée tf, après quoi le moteur s'arrête (triacs TR1 et TR'1 bloqués) jusqu'à un ordre de démarrage COM, SENS dans l'autre sens. On peut prévoir un recouvrement des commandes de mise en conduction des deux triacs TR1 et TR'1 pendant un court instant avant la fin de la durée td, pour éviter une interruption de l'alimentation du moteur pendant une ou plusieurs alternances.

On comprendra qu'on peut prévoir plusieurs résistances et plusieurs triacs si on veut passer plus progressivement de la forte tension d'alimentation à la tension normale, mais en général ce ne sera pas utile.

Bien entendu, pour la rotation dans l'autre sens, la résistance R2 et les triacs TR2 et TR'2 jouent les mêmes rôles que R1, TR1 et TR'1. Les durées td et tf ne sont pas nécessairement les mêmes dans les deux sens, et dans certaines applications où les besoins de puissance dans les deux sens de rotation ne seraient pas symétriques, on peut envisager de ne pas appliquer de modification de couple moteur pour l'un des sens de rotation.

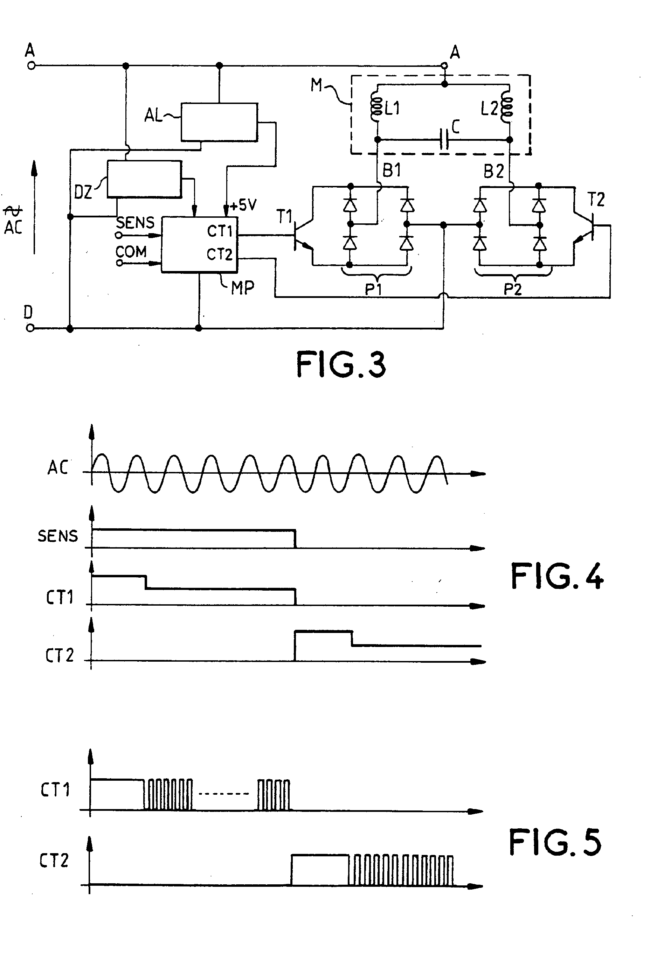

La figure 3 représente une variante de réalisation dans laquelle chacun des ensembles d'une résistance R1, R2 et de deux triacs TR1, TR'1 ou TR2, TR'2 est remplacé par un pont de diodes commandé par un transistor placé dans la branche de conduction continue du pont. Le pont P1, avec quatre diodes et un transistor T1, est associé à l'enroulement L1 et est placé en série entre la borne B1 et la borne d'alimentation D. Le pont P2 avec quatre diodes et un transistor de commande T2 est associé à l'enroulement L2 et est en série entre B2 et D.

Chaque pont de diodes peut être considéré comme ayant une diagonale alternative (le courant peut passer dans les deux sens d'une extrémité de cette diagonale à l'autre) et une diagonale continue (le courant ne peut passer que dans un sens d'une extrémité de cette diagonale à l'autre).

C'est la diagonale alternative du pont P1 qui est insérée entre les bornes B1 et D. La diagonale continue comprend seulement le transistor T1, commandé par le microcontrôleur MP. Le courant ne peut passer dans la diagonale alternative qu'en passant par la diagonale continue et le transistor T1 contrôle donc directement la tension et le courant appliqués à l'enroulement L1 du moteur. Pendant une phase de démarrage de durée td, le transistor T1 est rendu complètement conducteur (transistor saturé) et applique toute la tension d'alimentation AC au moteur. Puis, pendant une durée tf, suffisante pour que le moteur aille jusqu'à sa deuxième position stable et continue à tendre à pousser pendant un certain temps l'organe d'actionnement pour le mettre en pression, le transistor T1 est rendu seulement partiellement conducteur pour qu'une chute de tension s'établisse à ses bornes, afin de limiter la tension moyenne appliquée à l'enroulement L1. Le montage est symétrique pour l'autre sens de rotation (pont P2, transistor T2, enroulement L2).

La conduction du transistor T1 pendant la durée tf peut être soit continue, soit hachée à haute fréquence (fréquence largement supérieure à la fréquence de la tension alternative d'alimentation, et de préférence fréquence de hachage inaudible).

Si la conduction de T1 est continue pendant la durée tf, on prévoit que la base du transistor (dans le cas d'un transistor bipolaire) reçoit du microcontrôleur une tension de commande (CT1) plus faible que pendant la durée td, le transistor se comportant alors non pas comme un quasi court-circuit mais comme une résistance qui fait chuter de manière importante la tension d'alimentation de l'enroulement L1. Le couple du moteur est réduit en conséquence par rapport au couple présent pendant la durée td.

Si au contraire la conduction de T1 est hachée, c'est le rapport cyclique du hachage périodique qui règle le couple moyen du moteur. Ce rapport cyclique peut être de 1 (conduction continue) dans la période de démarrage td, et il peut être réduit à la valeur désirée pendant la période tf. C'est l'inductance du moteur qui lisse la valeur moyenne du couple moteur qui résulte de l'application d'une tension hachée.

La figure 4 représente le diagramme temporel des signaux de commande des transistors T1 et T2 dans le cas où c'est la tension de commande CT1 du transistor T1 qui est réduite pendant la durée tf. La constitution du circuit et le diagramme temporel est le même pour l'autre sens de rotation, en utilisant le pont P2 au lieu du pont P1. La commande CT1 ou CT2 du transistor du pont inutilisé est telle que ce transistor soit complètement bloqué.

La figure 5 représente le diagramme temporel des signaux de commande de hachage dans le cas où c'est le rapport cyclique du hachage qui est modifié entre les phases td et tf. Le rapport cyclique est supposé égal à 1 dans la phase de démarrage de durée td mais ce n'est pas obligatoire.

Les transistors T1 et T2 peuvent être remplacés par un autre type de composant semiconducteur unidirectionnel commandable (transistor MOS, IGBT).

Dans ce qui précède, on a considéré que le moteur avait une tension d'alimentation nominale au delà de laquelle le moteur ne pourrait pas tourner normalement en permanence sans risque, et on fait donc fonctionner ce moteur largement au delà de sa tension nominale pendant la durée td. Par exemple on utilise un moteur de 110 volts alors que la tension d'alimentation est de 220 volts.

Cependant, l'invention est transposable aussi au cas où le moteur est de toutes façons surdimensionné par rapport aux risques d'échauffement (pour des raisons de sécurité) ; dans ce cas on prévoit que la tension d'alimentation pendant la durée td est choisie à un niveau suffisant pour vaincre les frottements et autres forces de collage au démarrage, et est réduite ensuite à une valeur compatible avec les exigences de l'application, ceci indépendamment des risques d'échauffement du moteur. Par conséquent on considérera que ce qu'on appelle tension nominale d'alimentation du moteur est essentiellement celle qu'on souhaite utiliser pendant la durée tf après la phase de démarrage.

Une application typique dans laquelle on souhaite utiliser l'invention est un actionneur électromécanique linéaire, dans lequel le moteur synchrone entraîne un réducteur irréversible convertissant la rotation du moteur en mouvement de translation d'un organe d'actionnement (système écrou/vis). L'organe d'actionnement est par exemple une tige rendue solidaire du clapet d'une vanne hydraulique. La tige peut pousser ce clapet vers une position fermée et la retirer vers une position ouverte, selon le sens de rotation du moteur. Le couple donné au moteur est augmenté pendant la phase de démarrage pour vaincre les forces de frottement, éventuellement le grippage par l'oxydation, etc., et également les forces de collage existant entre le clapet et son siège, soit du fait de la nature du clapet soit du fait des forces exercées par le fluide.

## Revendications

1. Dispositif de commande électromécanique comprenant un moteur synchrone (L1, L2, C), **caractérisé en ce qu'**il comporte des moyens (R1, TR1 TR'1) pour donner au couple moteur une première valeur pendant une durée prédéterminée td suivant le démarrage du moteur, et une deuxième valeur, largement inférieure à la première valeur, au delà de cette durée.

2. Dispositif selon la revendication 1, **caractérisé en ce que** la première valeur de couple est obtenue en appliquant au moteur une tension d'alimentation largement supérieure à la tension d'alimentation moyenne après la durée prédéterminée td.

3. Dispositif selon la revendication 2, **caractérisé en ce que** la tension d'alimentation moyenne après la durée prédéterminée td est une tension nominale du moteur, au delà de laquelle le moteur ne peut pas tourner en permanence sans risques d'échauffement anormal, et la tension d'alimentation pendant la durée td est largement supérieure à cette valeur nominale.

4. Dispositif selon l'une des revendications précédentes, **caractérisé en ce que** des résistances (R1, R2) sont intercalées entre une borne (D) d'une source de tension d'alimentation et les enroulements statoriques (L1, L2) du moteur, au moins un triac (TR'1, TR'2) étant prévu en parallèle sur ces résistances pour les court-circuiter pendant la durée td.

5. Dispositif selon l'une des revendications 1 à 3, **caractérisé en ce qu'**un pont redresseur respectif (P1, P2) ayant une diagonale alternative et une diagonale continue, est intercalé selon sa diagonale alternative entre une borne (D) d'alimentation alternative et un enroulement respectif (L1, L2) du moteur, un composant semiconducteur unidirectionnel commandé étant placé dans la diagonale continue du pont, et des moyens de commande de conduction étant prévus pour modifier la conduction du semiconducteur après la durée td.

6. Dispositif selon la revendication 5, **caractérisé en ce que** le composant semiconducteur est un transistor bipolaire et **en ce qu'**il est prévu des moyens pour diminuer la tension appliquée à la base du transistor après la durée td.

7. Dispositif selon la revendication 5, **caractérisé en ce qu'**il est prévu un moyen de hachage à haute fréquence de la tension d'alimentation alternative appliquée au moteur, et des moyens pour modifier le rapport cyclique de hachage après la durée td pour réduire le couple moyen donné au moteur après cette durée.
